# DEMANDE DE BREVET EUROPEEN

(11) **EP 2 107 808 A1**
(43) Date de publication de la demande: **07.10.2009**
(21) Numéro de dépôt: 08154029.6
(22) Date de dépôt: 03.04.2008
(51) Int. Cl.: H04N 7/16

(54) **Module de sécurité (SM) pour unité de traitement de données audio/vidéo**

(71) Demandeur: Nagravision S.A., 1033 Cheseaux-sur-Lausanne (CH)
(72) Inventeur: Conus, Joël, 1417 Essertines-sur-Yverdon (CH); Gradassi, Luca, 1008 Prilly (CH); Ksontini, Rached, 1209 Pully (CH); Kudelski, Henri, 1071 Chexbres (CH)
(74) Mandataire: Leman Consulting S.A.

(57) **Abrégé**

Le but de la présente invention est de limiter l'impact des brèches de sécurité que sont les émulateurs de module de sécurité.

Ce but est atteint par un module de sécurité pour unité de traitement de données audio/vidéo numériques à accès conditionnel encryptées par des mots de contrôle, chargé de traiter des messages de sécurité contenant au moins un cryptogramme relatif à un mot de contrôle et une instruction relative au mot de contrôle, **caractérisé en ce qu**'il comprend des moyens pour recevoir par les messages de sécurité au moins deux microprogrammes exécutables par le module de sécurité, ledit module de sécurité comprenant des moyens pour stocker au moins deux microprogrammes et des moyens pour recevoir l'instruction du message de sécurité, pour sélectionner le microprogramme indiqué par l'instruction, pour exécuter ledit microprogramme avec au moins le cryptogramme comme paramètre d'exécution, cette exécution permettant de calculer le mot de contrôle à retourner à l'unité de traitement audio/vidéo.

## Description

### Introduction

La présente invention concerne le domaine de la sécurisation de données audio/vidéo à accès conditionnel et en particulier les mécanismes de sécurité exécutés dans un module de sécurité.

### Etat de la technique

La sécurisation de données audio/vidéo est bien connue et a fait l'objet de plusieurs publications dont "Functional Model of a Conditional Access System", EBU Technical Review, Winter 1995.

De façon bien connue, pour pouvoir visionner un événement de télévision à péage, tel qu'un film, un événement sportif ou un jeu notamment, plusieurs flux sont diffusés à destination d'une unité multimédia, par exemple d'un décodeur. Ces flux sont notamment d'une part le fichier de l'événement sous forme d'un flux de données chiffrées et d'autre part, un flux de messages de contrôle permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette donnée notamment.

Les opérations de sécurité sont généralement effectuées dans un module de sécurité associé à l'unité multimédia ou au récepteur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au récepteur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible, dans le boîtier du récepteur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle.

Etant donné que dans les quatre cas, bien que le niveau de sécurité diffère, la fonction est identique, on parlera de module de sécurité quelle que soit la manière de réaliser sa fonction ou la forme que peut prendre ce module. Dans les quatre formes décrites ci-dessus, le module de sécurité a des moyens d'exécution d'un programme (CPU) stocké dans sa mémoire. Ce programme permet d'effectuer les opérations de sécurité, vérifier les droits, effectuer une décryption ou activer un module de décryption etc.

Les moyens mis en oeuvre par des personnes malveillantes pour analyser le fonctionnement d'un tel module de sécurité peuvent être importants et peuvent permettent à ces personnes de réaliser des imitations de modules de sécurité dans lesquels les secrets nécessaires (les clés ou le numéro de série) ont été chargés. Un tel module se comporte comme un module authentique et possède également un processeur et une mémoire. Les fonctionnalités du module de sécurité sont émulées afin de reproduire le fonctionnement original.

### Brève description de l'invention

Ainsi le but de la présente invention est de limiter l'impact de ce type d'émulateur de module de sécurité.

Ce but est atteint par un module de sécurité pour unité de traitement de données audio/vidéo numériques à accès conditionnel encryptées par des mots de contrôle, ledit module étant chargé de traiter des messages de sécurité contenant au moins un cryptogramme relatif à un mot de contrôle et une instruction relative au mot de contrôle, caractérisé en ce qu'il comprend des moyens pour recevoir par les messages de sécurité au moins deux microprogrammes exécutables par le module de sécurité, ledit module de sécurité comprenant des moyens pour stocker au moins deux microprogrammes et des moyens pour recevoir l'instruction du message de sécurité, pour sélectionner le microprogramme indiqué par l'instruction, pour exécuter ledit microprogramme avec au moins le cryptogramme comme paramètre d'exécution, cette exécution permettant de calculer le mot de contrôle à retourner à l'unité de traitement audio/vidéo.

Selon l'invention, l'obtention du mot de contrôle final est soumise à l'exécution d'un programme qui n'est originellement pas résident dans le module de sécurité et qui est téléchargé dans ledit module. Les émulateurs de module de sécurité émulent les fonctions sur la base d'une autre unité centrale et ne sont pas à même d'exécuter directement le code machine.

### Brève description des figures

L'invention sera mieux comprise grâce à la description détaillée qui va suivre en se référant aux dessins annexés dans lesquels :
- la figure 1 illustre un premier mode de réalisation de l'invention,
- la figure 2 illustre un second mode de réalisation de l'invention faisant intervenir une clé,
- la figure 3 illustre un troisième mode de réalisation à deux étages, le cryptogramme intervenant sur les deux étages.

### Description détaillée

Le but de la présente invention est de faire intervenir l'exécution de code de programme pour obtenir le mot de contrôle final. Ce code n'est pas initialement présent dans le module et est envoyé dans un message de sécurité. De plus, plusieurs microprogrammes sont sélectionnables pour la production du mot de contrôle CW, le message de sécurité comprenant d'une part un cryptogramme CTG et d'autre part une instruction afin de sélectionner le microprogramme à utiliser.

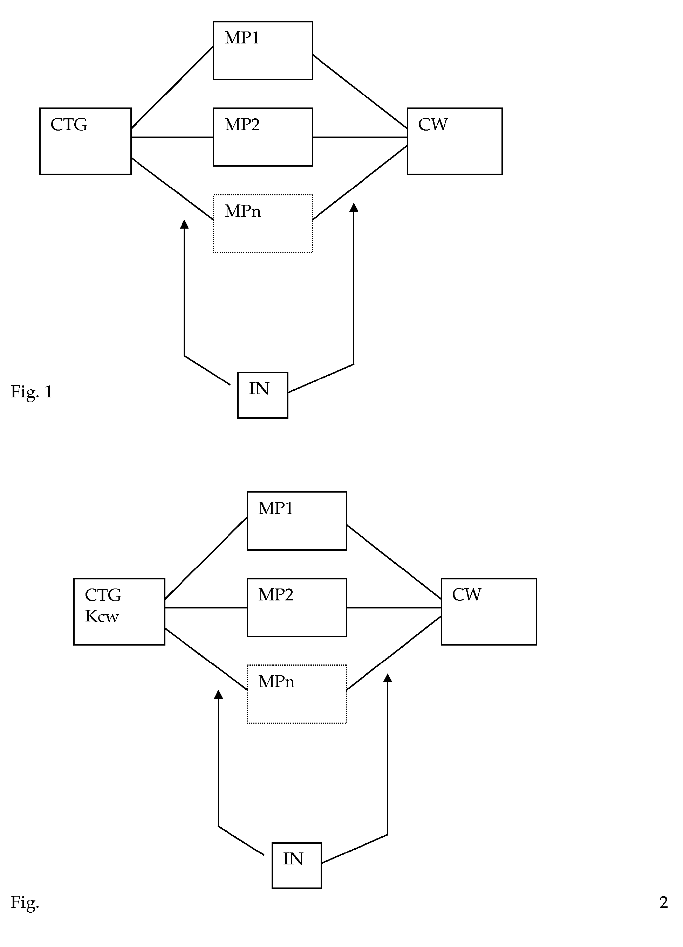

Selon un premier mode de réalisation illustré à la figure 1, le message de sécurité ECM contient un cryptogramme CTG et une instruction IN. Il est à noter que ce message de sécurité est lui-même sécurisé c'est-à-dire que son contenu est encrypté par une clé que possède le module de sécurité. Une fois décrypté, des informations de vérification (signature, hash) permettent de vérifier que son contenu est authentique et intègre.

L'instruction IN contenue dans le message de sécurité ECM est utilisée comme sélecteur afin de déterminer quel microprogramme (MP1, MP2, MPn) doit être utilisé. Ce microprogramme est chargé dans la mémoire d'exécution du processeur et peut être associé à d'autres modules logiciels. Le cryptogramme CTG contenu dans le message de sécurité est utilisé comme variable d'entrée de ce microprogramme et l'exécution dudit microprogramme permet d'obtenir le mot de contrôle CW.

Selon un deuxième mode de réalisation illustré à la figure 2, le microprogramme MP sélectionné par l'instruction IN reçoit comme variable le cryptogramme CTG et une clé Kcw contenue dans le module de sécurité. Cette clé est de préférence envoyée au module de sécurité par un autre message de sécurité tel qu'un message de gestion des droits EMM. Le microprogramme MP est dès lors un module particulier de décryption utilisant la clé Kcw comme clé de décryption sur la cryptogramme CTG.

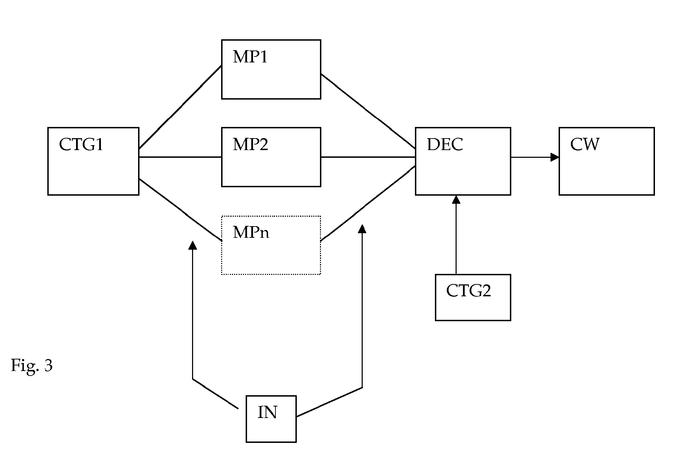

Selon un troisième mode de réalisation illustré à la figure 3, le cryptogramme est divisé en deux parties, une première partie CTG1 est utilisée avec le microprogramme MP sélectionné avec l'instruction IN, le résultat des opérations effectuées avec le microprogramme ou une partie du microprogramme étant transmis à un module cryptographique DEC. Ce module reçoit également comme variable la seconde partie CTG2 du cryptogramme. L'opération cryptographique effectuée par le module DEC sur la base d'une part du résultat du traitement par le microprogramme MP de la première partie du cryptogramme CTG1 et d'autre part de la seconde partie du cryptogramme CTG2 permet d'obtenir le mot de contrôle CW. Il est à noter que l'instruction IN n'intervient pas dans cette dernière étape.

Ce module cryptographique DEC peut être de type IDEA, AES, TDES ou autre. Le résultat du microprogramme MP peut être utilisé comme clé ou comme entrée dans ce module cryptographique. Dans le premier cas, la seconde partie du cryptogramme CTG2 est utilisée comme entrée et dans le second cas, elle est utilisée comme clé.

Comme indiqué plus haut, un ou plusieurs microprogrammes MP sont transmis depuis un centre de gestion à destination d'un récepteur/décodeur dans lequel est connecté le module de sécurité. Un microprogramme MP peut être envoyé dans un message spécifique de sécurité (EMM) encrypté par une clé propre audit module de sécurité. Ainsi ce n'est que ce module de sécurité qui pourra accéder à son contenu. Selon un autre mode de réalisation, le microprogramme est inclus dans le même message que le cryptogramme et l'instruction. Le traitement de ce message fait donc intervenir le chargement du microprogramme et son exécution avec le cryptogramme comme paramètre.

Selon un autre mode de réalisation, le microprogramme est encrypté par une clé spécifique audit microprogramme. Le microprogramme est envoyé dans un message de sécurité et, lors de sa réception dans le module de sécurité, il est stocké sous forme encryptée. Le message de sécurité contenant le cryptogramme va aussi contenir la clé pour décrypter le microprogramme.

Selon un mode préféré de l'invention, chaque microprogramme est signé afin de garantir son authenticité. Le microprogramme est stocké dans la mémoire du module de sécurité sous forme encryptée. Avant l'exécution, le microprogramme est décrypté avec une clé qui est soit dans la mémoire sécurisée du module de sécurité, soit dans le message de sécurité ayant déclenché cette opération. Une fois décrypté, il est authentifié grâce à une signature de l'ensemble des données du microprogramme. Pour la vérification de cette signature, il est fait appel à une clé publique de l'organisme ayant signé les données, cet organisme ayant utilisé sa clé privée et secrète pour générer la signature.

Le nombre de microprogrammes est au moins de deux et peut être plus. Ils sont de préférence stockés dans une mémoire non exécutable du module de sécurité sous forme encryptée. Une fois l'un des microprogrammes sélectionné par l'instruction IN, ce microprogramme est décrypté, authentifié et transféré dans une zone exécutable du processeur du module de sécurité. D'autres parties du code du processeur peuvent intervenir pour l'exécution du microprogramme. Ce qu'il faut noter c'est que sans les opérations exécutées par le microprogramme, le résultat de la transformation du cryptogramme ne peut être obtenu.

Selon un mode de réalisation, le message de sécurité contient un bloc de microprogrammes encrypté par une clé. Cette clé peut soit être une clé mémorisée dans le module de sécurité lors de son initialisation, soit être mise à jour par des messages de sécurité. Chaque microprogramme est encrypté par une clé propre. Lors de la réception du message de sécurité, le module de sécurité extrait le bloc de microprogramme et le décrypte avec la clé correspondante. Dans la mémoire du module de sécurité, bien que le bloc de microprogrammes ait été décrypté, chaque microprogramme reste encrypté par sa clé propre. Lors de l'arrivée d'un message de sécurité contenant un cryptogramme permettant d'obtenir un mot de contrôle, ce message va également contenir la clé pour décrypter le microprogramme indiqué par l'instruction.

Selon un mode de réalisation particulier, le module de sécurité dispose d'un processeur sur lequel est chargé un logiciel de virtualisation c'est-à-dire que des instructions écrites dans un langage générique sont exécutées par ce processeur via la couche de virtualisation. Un exemple d'une telle couche de virtualisation est connu sous l'appellation Java. Les microprogrammes contenus dans les messages de sécurité sont formés d'instructions compatibles avec la couche virtuelle. Ils sont exécutables par le couche de virtualisation et peuvent ainsi être exécutés par des processeurs de types différents pour autant que chacun de ces processeurs dispose d'une telle couche de virtualisation commune.

Selon un autre mode particulier de l'invention, le module de sécurité comprend un élément hardware programmable de la famille des FPGA appelé module de logique programmable. Ces circuits exécutent une fonction qui est définie grâce à un programme de configuration des connexions internes. Ce programme permet de relier les différents éléments internes du circuit afin de former des flip-flop, registre à décalage ou toute autre fonction logique. Ainsi un microprogramme comprend un tel programme de configuration de logique programmable permettant de modifier le comportement de ce module de logique programmable et d'exécuter des fonctions particulières sur la variable qu'est le cryptogramme.

Le résultat obtenu par les différents opérations cryptographiques dénommé ci-dessus "mot de contrôle" peut encore subir des modifications avant d'être transmis à l'unité de traitement de données audio/vidéo numériques par exemple par une encryption ou décryption, voire un simple mélange (XOR) avec une valeur d'un registre. Il peut également être modifié par l'unité de traitement de données audio/vidéo numériques par exemple une décryption dans le module de décryption du flux audio/vidéo.

## Revendications

1. Module de sécurité (SM) pour unité de traitement de données audio/vidéo numériques à accès conditionnel encryptées par des mots de contrôle (CW), chargé de traiter des messages de sécurité (ECM, EMM) contenant au moins un cryptogramme (CTG) relatif à un mot de contrôle (CW) et une instruction (IN) relative au mot de contrôle, **caractérisé en ce qu'**il comprend des moyens pour recevoir par les messages de sécurité (ECM, EMM) au moins deux microprogrammes (MP) exécutables par le module de sécurité, ledit module de sécurité (SM) comprenant des moyens pour stocker au moins deux microprogrammes (MP) et des moyens pour recevoir l'instruction (IN) du message de sécurité, pour sélectionner le microprogramme (MP) indiqué par l'instruction (IN), pour exécuter ledit microprogramme avec au moins le cryptogramme (CTG) comme paramètre d'exécution, cette exécution permettant de calculer le mot de contrôle (CW) à retourner à l'unité de traitement audio/vidéo.

2. Module de sécurité (SM) selon la revendication 1, **caractérisé en ce que** le microprogramme (MP) est sous forme encryptée et/ou authentifiée dans le message de sécurité, et qu'il comprend des moyens pour décrypter et/ou authentifier le microprogramme (MP) avant son exécution.

3. Module de sécurité (SM) selon la revendication 2, **caractérisé en ce que** le microprogramme est contenu dans un premier message de sécurité, les moyens de décryption dudit microprogramme étant contenue dans un second message de sécurité.

4. Module de sécurité (SM) selon la revendication 1 ou 2, comprenant un module cryptographique **caractérisé ce que** le cryptogramme (CTG) comprend une première (CTG1) et une seconde (CTG2) parties, la première partie agissant sur le microprogramme sélectionné par l'instruction (IN), et la seconde partie agissant sur le module cryptographique recevant le résultat obtenu par le microprogramme sélectionné pour produire le mot de contrôle (CW).

5. Module de sécurité (SM) selon les revendications 1 à 4, **caractérisé en ce qu'**il comprend un processeur et un logiciel de virtualisation permettant d'exécuter des instructions génériques, ledit microprogramme étant formé d'instructions génériques.

6. Module de sécurité (SM) selon les revendications 1 à 4, **caractérisé en ce qu'**il comprend un module de logique programmable, ledit microprogramme étant un programme de configuration de logique programmable.

7. Méthode de contrôle d'accès à un contenu audio/vidéo exécuté par un module de sécurité, ledit contenu étant encrypté par des mots de contrôle CW, des cryptogrammes (CTB) relatifs aux dits mots de contrôle étant transmis dans des messages de sécurité (ECM) contenant également au moins une instruction IN, **caractérisé en ce qu'**elle comprend les étapes suivantes :
a. réception d'au moins deux microprogrammes (MP) exécutables par le module de sécurité contenus dans les messages de sécurité (ECM, EMM),
b. stockage desdits microprogrammes (MP) dans une mémoire de microprogrammes dudit module de sécurité,
c. réception d'un message de sécurité (ECM) et extraction du cryptogramme (CTG) et de l'instruction (IN),
d. sélection d'un microprogramme parmi les microprogrammes selon la valeur de l'instruction (IN),
e. exécution dudit microprogramme sélectionné avec au moins le cryptogramme (CTG) comme paramètre d'exécution, cette exécution permettant de calculer le mot de contrôle (CW) à retourner à l'unité de traitement audio/vidéo.

8. Méthode de contrôle d'accès à un contenu audio/vidéo selon la revendication 7, **caractérisé en ce que** le microprogramme (MP) est sous forme encryptée et/ou authentifiée dans le message de sécurité, et qu'elle comprend une étape de décryption et/ou authentification du microprogramme (MP) avant son exécution.

9. Méthode de contrôle d'accès à un contenu audio/vidéo selon la revendication 8, **caractérisé en ce que** le microprogramme est reçu par un premier message de sécurité, la clé de décryption dudit microprogramme étant transmise dans un second message de sécurité.

10. Méthode de contrôle d'accès à un contenu audio/vidéo selon la revendication 7 ou 8, **caractérisé ce que** le cryptogramme (CTG) comprend une première (CTG1) et une seconde (CTG2) partie, la première partie agissant sur le microprogramme sélectionné par l'instruction (IN), et la seconde partie agissant sur un module cryptographique recevant le résultat obtenu par le microprogramme sélectionné pour produire le mot de contrôle CW.
